# EUROPÄISCHE PATENTSCHRIFT

(11) **EP 0 413 234 B1**
(45) Veröffentlichungstag und Bekanntmachung des Hinweises auf die Patenterteilung: **01.03.1995**
(21) Anmeldenummer: 90115122.5
(22) Anmeldetag: 07.08.1990
(51) Int. Cl.: C08K 5/13, C08L 51/04

(54) **Mischungen von Bisphenolen und Pfropfpolymerisaten**
Mixtures of bisphenol and graftpolymers
Mélanges de bisphénols et de polymères greffés

(30) Priorität: 18.08.1989 DE 3927318
(43) Veröffentlichungstag der Anmeldung: 20.02.1991
(73) Patentinhaber: BAYER AG, 51368 Leverkusen (DE)
(72) Erfinder: Lindner, Christian, Dr., D-5000 Köln 80 (DE); Lütjens, Holger, Dr., D-5000 Köln 80 (DE); Piejko, Karl-Erwin, Dr., D-5060 Bergisch-Gladbach 2 (DE)

(56) Entgegenhaltungen:
- EP-A- 0 225 510
- NL-A- 6 409 718
- NL-A- 7 200 034

## Beschreibung

Gegenstand der Erfindung sind pulverförmige Mischungen aus 1 bis 99 Gew.-% eines Pfropfpolymerisats harzbildender Monomerer auf einem Kautschuk und 99 bis 1 Gew.-% eines Bisphenols der Formel 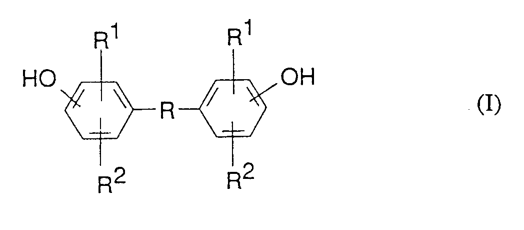
mit
- R¹, R²: = H, C₁-C₄-Alkyl, Halogen und
- R: = Einfachbindung, -CH₂-, C₂H₄-, -C₃H₆-, 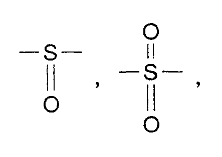 -O-
und ihre Verwendung zur Verbesserung von Chemiewerkstoffen.

Pfropfpolymerisate harzbildender Monomerer auf Kautschuke - im folgenden Pfropfpolymerisate - dienen unter anderem als Additive in Chemiewerkstoffen, zum Beispiel zur Verbesserung der Schlagfestigkeit. Handelt es sich um thermoplastische Kunststoffe, dann kann ein Pfropfpolymerisat durch Schmelzcompoundieren eingearbeitet werden, Bei duroplastischen Kunststoffen ist dies dagegen nicht möglich.

Pfropfpolymerisate der angegebenen Art sind je nach Zusammensetzung mehr oder weniger klebrige Stoffe. In Pulverform neigen sie mehr oder weniger zum Verklumpen. Verklumpte Produkte machen aber bei der Einarbeitung in Chemiewerkstoffe Schwierigkeiten, ganz besonders, wenn es sich um vernetztes Material handelt. Eine mikrodisperse Verteilung ist oft überhaupt nicht möglich.

Es besteht daher ein Bedarf an in nicht verklebender Pulverform vorliegenden Pfropfpolymerisaten und ein Bedarf an Pfropfpolymerisaten in einer in duroplastische Kunststoffe einarbeitbaren Form.

Die pulverförmigen Mischungen der Erfindung erfüllen beide Forderungen. Sie stellen einerseits stabile, nicht verklumpende Pulver der Pfropfpolymerisate dar, die sich zur Einarbeitung in thermoplastische Kunststoffe eignen und andererseits, aufgrund des Gehaltes an Bisphenolen, eine Komponente zur Herstellung duroplastischer Werkstoffe.

Beispielsweise können die erfindungsgemäßen Mischungen über die Hydroxylgruppen der darin enthaltenen Bisphenole mit Epoxidharzen unter Bildung hochpolymerer Stoffe in bekannter Weise irreversibel reagieren, wobei die in den erfindungsgemäßen Mischungen gleichmäßig verteilten Pfropfpolymerisate in das neu gebildete Hochpolymere ebenfalls in gleichmäßig verteilter Form übergehen.

Die erfindungsgemäßen Mischungen sind prinzipiell in jedem Mischungsverhältnis von Bisphenolen und Pfropfpolymerisaten herstellbar. Praktische Bedeutung haben jedoch nur Mischungen, in denen von keiner der beiden Komponenten weniger als 1 Gew.-% enthalten sind. Verwendet man sehr hoch kautschukhaltige Pfropfpolymerisate mit besonders großer Neigung zum Zusammenkleben bei der Lagerung, dann ist für eine gute Pulverqualität der Mischungen ein Bisphenol-Gehalt von wenigstens 10 Gew.-% erforderlich.

Erfindungsgemäße Mischungen zur Herstellung von Duromeren enthalten bevorzugt 1 bis 50 Gew.-% Pfropfpolymerisat und 99 bis 50 Gew.-% Bisphenol, insbesondere 5 bis 25 Gew.-% Pfropfpolymerisat und 95 bis 75 Gew.-% Bisphenole.

Generell bevorzugt sind demnach Mischungen aus 10 bis 95 Gew.-% Bisphenol, insbesondere 15 bis 25 Gew.-%, und 90 bis 5 Gew.-% Pfropfpolymerisat, insbesondere 85 bis 5 Gew.-%.

Als Bisphenole für die erfindungsgemäßen Mischungen eignen sich solche der Formel (I) 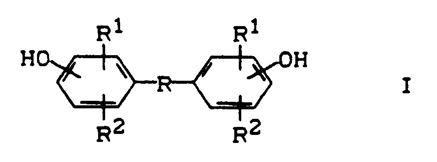
mit
- R¹, R²: = H, C₁-C₄-Alkyl, Halogen, bevorzugt H, CH₃, Cl, Br.
- R: = Einfachbindung, -CH₂-, -C₂H₄-, -C₃H₆-, 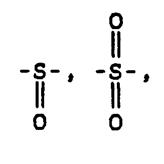 -O-.

Beispiele für diese Bisphenole sind: 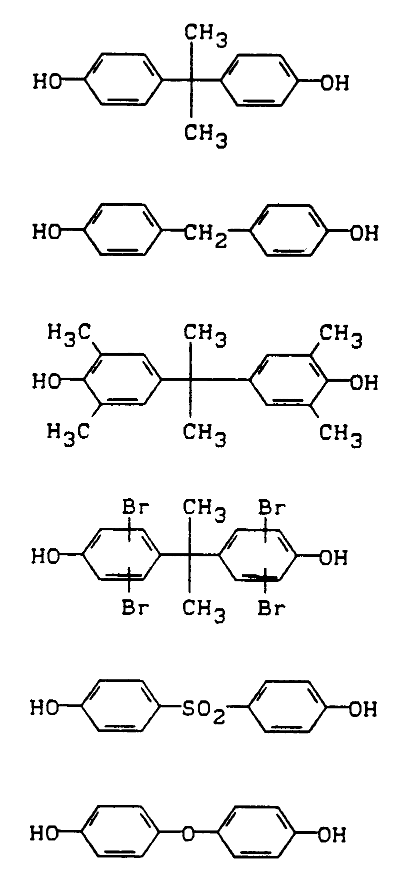
Bevorzugte Pfropfpolymerisate enthalten als Pfropfgrundlage einen teilchenförmigen partiell vernetzten Kautschuk und als Pfropfauflage Polymerisate olefinisch ungesättigter Monomerer. Sie sind im allgemeinen überwiegend thermoplastisch.

Die Pfropfgrundlagen (Kautschuke) haben bevorzugt mittlere Teilchendurchmesser (d₅₀) von 0,08 bis 1,5 »m, insbesondere 0,1 bis 0,5 »m, und Gelgehalte (als Maß für die Vernetzung) von >20 Gew.-%, insbesondere >50 Gew.-%, bevorzugt >70 Gew.-%.

Die Pfropfpolymerisate enthalten bevorzugt 20 bis 95 Gew.-% Kautschuk und 80 bis 5 Gew.-% pfropfpolymerisierte harzbildende Monomere (Pfropfauflage). Sie werden in an sich bekannter Weise durch Polymerisation der harzbildenden Monomeren in Gegenwart des Kautschuks hergestellt. Dabei wird ein Teil des so erzeugten Polymerisats der harzbildenden Monomere chemisch an den Kautschuk gebunden (aufgepfropft). Daneben bildet sich freies Polymerisat der Harzbildenden Monomeren. Als Pfropfpolymerisat im Sinne dieser Erfindung wird das Produkt der Pfropfpolymerisation, d.h. das Gemisch des eigentlichen Pfropfpolymerisates und des freien Polymerisats der zu pfropfenden Monomeren, betrachtet.

Als Pfropfgrundlagen verwendete Kautschuke besitzen Erweichungstemperaturen unter 0°C. Geeignet sind Dien-, Acrylat-, Olefin- und Silikon-Kautschuke.

Die Pfropfauflage wird aus olefinisch ungesättigten Monomeren hergestellt, insbesondere durch Polymerisation von Ethylen, Propylen, Vinylacetat, Vinylpropionat, C₁-C₁₀-Alkylacrylat (insbesondere Methyl-, Ethyl-, Butyl-, Hexylacrylat), Butadien, Isopren, Vinylchlorid, Vinylidenchlorid, Vinylidenfluorid, Styrol, p-Methylstyrol, α-Methylstyrol, Chlorstyrol, Bromstyrol, Acrylnitril, Methacrylnitril, C₁-C₁₀-Alkylmethacrylat (insbesondere Methyl-, Ethyl-, Hexylmethacrylat) Maleinsäureimid, Maleinsäureanhydrid, Maleinsäureester, Acrylamid, Methacrylamid, Vinylurethane, Vinylether oder Mischungen daraus. Besonders bevorzugte Pfropfmonomere sind Styrol, Alkylacrylate, Alkylmethacrylate und Acrylnitril sowie deren Mischungen.

Bevorzugte Pfropfgrundlagen sind Butadien-, Isopren- und Chloropren-Polymerisate, die gegebenenfalls Comonomere wie Acrylnitril, Styrol, Vinylacetat, Vinylether oder Alkylacrylat copolymerisiert enthalten. Besonders bevorzugt sind die Homopolymerisate. Ebenfalls bevorzugt sind Olefinkautschuke, z.B. Copolymerisate des Ethylens mit Vinylacetat, Alkylacrylat oder Propylen. Geeignete Acrylatkautschuke sind Polymerisate von Acrylsäure-C₁-C₈-alkylestern, z.B. Methyl-, Butyl-, Octyl- und 2-Ethylhexylester der Acrylsäure, die gegebenenfalls bis zu 40 Gew.-% andere Vinylmonomere einpolymerisiert enthalten.

Die Acrylatkautschuke können durch Einpolymerisieren kleiner Mengen polyfunktioneller Monomerer vernetzt sein. Beispiele für solche Monomere sind:

Ester von ungesättigten Carbonsäuren mit einem Polyol (vorzugsweise 2 bis 20 Kohlenstoffatome in der Estergruppe), wie Ethylenglykoldimethacrylat, Ester einer mehrbasischen Carbonsäure mit einem ungesättigten Alkohol (vorzugsweise 8 bis 30 Kohlenstoffatome im Esterrest), wie Triallylcyanurat, Triallylisocyanurat; Divinylverbindungen wie Divinylbenzol; Ester ungesättigter Carbonsäuren mit ungesättigten Alkoholen (bevorzugt 6 bis 12 Kohlenstoffatome im Esterrest), wie Allylmethacrylat; Phosphorsäureester, beispielsweise Triallylphosphat und 1,3,5-Triacryloylhexahydro-s-triazin. Besonders bevorzugte polyfunktionelle Monomere sind Triallylcyanurat, Triallylisocyanurat, Triallylphosphat, Allylmethacrylat, Ethylenglykoldimethacrylat und 1,3,5-Tricryloylhexahydro-s-triazin.

Die Menge der zur Vernetzung benutzten polypunktionellen Monomeren ist bevorzugt 0,05 bis 10 Gew.-%, insbesondere 0,1 bis 5,0 Gew.-% (bezogen auf Gesamtmenge vernetzten Acrylatkautschuk). Weitere geeignete Acrylatkautschuke besitzen Kern/Mantel-Struktur, haben beispielsweise einen Kern aus vernetztem Polybutadien (vgl. EP-PS 34 748).

Silikonkautschuke sind vorzugsweise vernetzt und enthalten Einheiten der Formeln (II) bis (V). 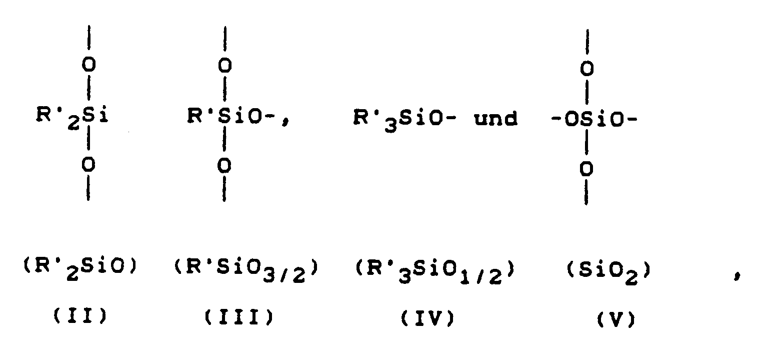
in welchen
R′ einen einwertigen organischen Rest darstellt.

Einwertige organische Reste R′ sind z.B. organische Reste mit 1 bis 40 C-Atomen, beispielsweise Alkylgruppen, vorzugsweise C₁-C₁₀-Alkyl, Arylgruppen, vorzugsweise C₆-C₂₄-Aryl, Alkylarylgruppen, vorzugsweise C₇-C₃₀-Alkylaryl, Arylalkylgruppen, vorzugsweise C₇-C₃₀-Aralkyl, C₁-C₂₀-Alkoxy, C₁-C₂₀-Thioalkyl.

Besonders bevorzugt sind: Methyl, Ethyl, tert.-Butyl, Phenyl, Methylphenyl, Bisphenyl, Phenylmethyl. Ebenfalls in Frage kommen C₁-C₁₀-Alkoxy-Reste und radikalisch angreifbare Gruppen wie Vinyl- und Mercaptopropyl-Reste.

Bevorzugt sind mindestens 80 % aller Reste R Methyl. Besonders bevorzugt sind Kombinationen aus Methyl und Ethyl.

Auf 100 Mol Einheiten der Formel R₂SiO kommen vorzugsweise 0 bis 10 Mol Einheiten der Formel RSiO_{3/2}, 0 bis 1,5 Mol Einheiten R₃SiO_{1/2} und 0 bis 3 Mol Einheiten der Formel SiO₂.

Bevorzugte Silikonkautschuke enthalten eingebaute Einheiten radikalisch angreifbarer Gruppen. Diese sind zur Radikaladdition oder Übertragungsreaktion befähigt. Solche Gruppen sind vorzugsweise Vinyl-, Allyl-, Chloralkyl-, Mercaptogruppen, vorzugsweise in Mengen von 2 bis 10 Mol-%, bezogen auf die Reste R.

Besonders bevorzugte Silikonkautschuke sind teilchenförmige Polymerisate mit einer Kern/Mantel-Struktur.

Zur Herstellung der erfindungsgemäßen Mischungen müssen die Pfropfpolymerisate als wäßrige Emulsion (Latex) vorliegen. Solche Emulsionen erhält man, indem man die Pfropfpolymerisate in wäßriger Emulsion in Anwesenheit eines Kautschuklatex polymerisiert. Diese Art der Herstellung von Pfropfpolymerisaten ist bekannt.

Zur Herstellung der erfindungsgemäßen Mischungen vereinigt man die wäßrige Emulsion eines Pfropfpolymerisats mit einer wäßrigen Lösung eines Alkali-Bisphenolats, koaguliert die Mischung bei pH-Werten <7 und isoliert das Koagulat in Pulverform.

Im Detail wird das Verfahren wie folgt durchgeführt:
Verwendet werden wäßrige Emulsionen der Pfropfpolymerisate wie sie bei der Herstellung der Pfropfpolymerisate anfallen. Diese enthalten normalerweise bis zu 60 Gew.-%, insbesondere bis zu 45 Gew.-%, Polymerisat. Wäßrige Lösungen der Bisphenolate sind einfach durch Lösen der Bisphenole bei 20 bis ca. 100°C in wäßrigen Alkalihydroxid-Lösungen erhältlich, wobei die Alkalihydroxide in stöchiometrischen Mengen, bezogen auf phenolische Gruppen der Bisphenole, verwendet werden. Diese Bisphenol-Salz-Lösungen besitzen normalerweise Konzentrationen von 5 bis 20 Gew.-%. Die Emulsion und die Lösung werden im gewünschten Mengenverhältnis gemischt und die Mischung dann koaguliert.

Als Koaguliermittel verwendet man wäßrige Lösungen von Sauren (Carbonsäuren oder Mineralsäuren wie Essigsäure, Ameisensäure, Propionsäure, Salzsäure, Schwefelsäure, Phosphorsäure), gegebenenfalls zusammen mit wasserlöslichen Salzen wie NaCl, MgSO₄·Na₂SO₄, CaCl₂. Diese Koaguliermittel besitzen selbst einen pH-Wert <7, insbesondere <5. Koaguliert wird normalerweise bei 20 bis 100°C, insbesondere 50 bis 85°C:

### Methode A:

Die Pfropfpolymerisatemulsion wird mit der Bisphenol-Salz-Lösung im gewünschten Mischungsverhältnis vermischt. Damit beim Vermischen keine Störungen wie Latexaufrahmung oder Teilkoagulation auftreten, sind spezielle pH-Wert-Verhältnisse und Emulgatoren der Pfropfpolymeremulsion erforderlich. Die resultierende Mischung muß einen pH-Wert >7 aufweisen. Werden Pfropfpolymeremulsionen verwendet, die selbst schon einen pH >7 aufweisen, so ergeben sich bei der Vermischung üblicherweise keine Probleme. Werden Pfropfpolymerisatemulsionen verwendet, die einen pH-Wert <7 aufweisen, so empfiehlt es sich, diese Emulsionen durch Zusatz alkalischer, wäßriger Lösungen zuerst auf einen pH-Wert >7 einzustellen und dann erst mit der Bisphenol-Salz-Lösung zu mischen.

Die Pfropfpolymerisatemulsionen enthalten anionische Emulgatoren, z.B. Harzseifen, deren disproportionierte Derivate, Alkylsulfonate, substituierte Arylsulfonate oder längerkettige Alkylcarbonsäuren, wie z.B. Ölsäure.

Die resultierende Mischung wird anschließend im angegebenen Temperaturbereich bei pH-Werten <7 koaguliert, insbesondere bei pH-Wert <5.

### Methode B:

Diese Methode kann u.a. angewendet werden, wenn die Pfropfpolymerisatemulsionen nicht störungsfrei mit der Bisphenol-Salz-Lösung mischbar sind.

In diesem Verfahren werden die Pfropfpolymerisatemulsion und die Bisphenol-Salz-Lösung separat aber gleichzeitig in ein Fällungsmedium eingespeist - unter gleichzeitiger Vermischung und Ausfällung. Temperaturen und pH-Werte sind wie bei Methode A.

Der nach Methode A oder B gewonnene wäßrige Brei aus Pfropfpolymerisat und Bisphenol wird anschließend durch Filtration von der wäßrigen Phase abgetrennt, gewaschen und nach üblichen Methoden zu einem Pulver getrocknet.

Die erfindungsgemäßen Mischungen stellen lagerbeständige, klebfreie Pulver dar, deren Teilchendurchmesser im Bereich von 200 »m bis 2 mm liegen. Die Mischungen lassen sich in der Herstellung von Duromeren verwenden, die über phenolische Additions- oder Kondensationsreaktionen aufgebaut werden, insbesondere in Epoxidharzsystemen, in denen sie - aufgrund des gut dispergierten Pfropfpolymeren - Verbesserung der mechanischen Eigenschaften bewirken, ohne Störungen (Stippen) der Formkörperoberflächen. Andererseits lassen sich die Mischungen zur Verbesserung in den thermoplastischen Formmassen einsetzen, in denen bereits Pfropfcopolymerisate und Bisphenole als Komponente enthalten sind, z.B. in thermoplastischen Polyamidblends. Hier bewirken die erfindungsgemäßen Mischungen eine gleichmäßigere Verteilung der Komponenten ineinander bei der Compoundierung. So hergestellte Formmassen weisen u.a. auch eine verbesserte Alterungs- und Verarbeitungsstabilität auf. Die sogenannte Verarbeitungsbreite ist für den Kunststoffartikel-Hersteller erhöht.

### Beispiele

### 1. Herstellung einer Bisphenol A-Salz-Lösung

In 1972 Gew.-Teilen Wasser werden 80 Gew.-Teile NaOH und 228 Gew.-Teile Bisphenol A bei Zimmertemperatur gelöst.

### 2. Verwendete Pfropfpolymerisatemulsionen

2.1 Pfropfpolymerisat von 30 Gew.-% Methylmethacrylat auf 70 Gew.-% vernetzten Polybutylacrylatkautschuk (Teilchendurchmesser des Kautschuks (d₅₀) = 0,5 »m, Gelgehalt 91 Gew.-%), hergestellt durch radikalische Pfropfpolymerisation in Emulsion. Die Pfropfpolvmerisatemulsion besitzt einen pH-Wert von 3,5 und einen Polymerfeststoffgehalt von 39,5 Gew.-%. Emulgator ist das Na-Salz von C₁₄-C₁₈-Alkylsulfonsäuren. Die ursprüngliche saure Emulsion wurde durch Zugabe 10 gew.-%iger Natronlauge auf einen pH-Wert von 12 eingestellt.
2.2 Pfropfpolymerisat von 20 Gew.-% Styrol-Acrylnitril (72/28)-Copolymerisat auf 80 Gew.-% vernetztes Polybutadien (Teilchendurchmesser (d₅₀) = 0,4 »m, Gelgehalt 93 Gew.-%), hergestellt durch radikalische Pfropfpolymerisation in Emulsion. Die Pfropfpolymerisatemulsion besitzt einen pH-Wert von 10 und einen Polymerfeststoffgehalt von 39,3 Gew.-%. Emulgator ist das Na-Salz der disproportionierten Abietinsäure.
2.3 Wie 2.1, aber ohne Behandlung mit Natronlauge (pH 3,5).

### 3. Herstellung der Mischungen aus Emulsion und Bisphenol-Salz-Lösung

3.1

| Nr. | Typ | Gew.-Teile | Gew.-Teile Lösung 1 |
|---|---|---|---|
| 1 | 2.1 | 455 | 200 |
| 2 | 2.1 | 354 | 600 |
| 3 | 2.1 | 253 | 1000 |
| 4 | 2.2 | 254 | 1000 |
| 5 | 2.3* | 254 | 1000 |

| | | | |
|---|---|---|---|
| * Vergleich: Nicht alkalisch eingestellt. Während sich die Mischungen 1 bis 4 einwandfrei herstellen lassen und sich beim Vermischen kein Koagulat bildet, findet bei 5 ein Teilausfall der Mischungskomponente statt, der sedimentiert und abfiltriert werden kann. | | | |

3.2 Pulveraufarbeitungen
3.2.1 Die Mischungen 3.1 (Nr. 1, 2, 3, 4) werden wie folgt zum Pulver aufgearbeitet:
   Eine Mischung aus
   300 Gew.-Teilen Wasser
   91 Gew.-Teilen 10 %iger Schwefelsäure
   6 Gew.-Teilen NaCl
   werden bei 50°C vorgelegt. Unter Rühren werden jeweils 317 Gew.-Teile der Mischungen 3.1 (Nr. 1, 2, 3, 4) innerhalb von 15 Min. bei -50°C eindosiert.
   Nach Abkühlen auf 20°C wird filtriert, mit Wasser gewaschen und bei 60°C getrocknet. Die resultierenden Materialien besitzen eine gute Pulverqualität; die Feinteiligkeit des Pulvers steigt mit zunehmendem Bisphenol A-Gehalt (vgl. 3.1 (Nr. 1, 2, 3).
3.2.2 Vergleich:
   Koaguliert man unter gleichen Bedingungen, wie oben beschrieben, die Pfropfpolymerisatemulsionen 2.1, 2.3 und 2.2, so werden nach dem Trocknen kautschukartige, klumpige Materialien erhalten, die beim Lagern Neigung zum Zusammenkleben aufweisen.
3.2.3 Eine Mischung aus
   300 Gew.-Teilen Wasser
   140 Gew.-Teilen 10 %ige Schwefelsäure
   6 Gew.-% NaCl
   werden vorgelegt. Bei 23°C werden unter Rühren zu separaten Mengenströmen 333 Gew.-Teile der Lösung 1 und 84 Gew.-Teile der sauren Emulsion 2.1 über einen Zeitraum von 15 Min. eingespeist. Die resultierende Mischung wird, wie in 3.2.1 beschrieben, filtriert und getrocknet. Es wurde ein feinteiliges, rieselfähiges, lagerbeständiges Pulver erhalten.

## Patentansprüche

1. Pulverförmige Mischungen aus Pfropfpolymerisat harzbildender Monomerer auf einen Kautschuk und einem Bisphenol der Formel 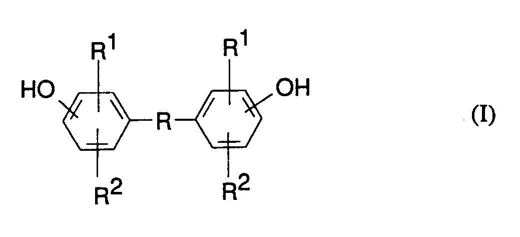 mit
R¹, R² = H, C₁-C₄-Alkyl, Halogen und
R = Einfachbindung, -CH₂-, C₂H₄-, -C₃H₆-, 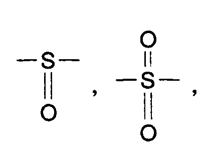 -O-.

2. Mischungen nach Anspruch 1, in denen die Pfropfpolymerisate thermoplastische Polymerisate darstellen, die aus einem teilchenförmigen, partiell vernetzten Kautschuk als Pfropfgrundlage und aufgepfropftem Polymerisat olefinisch ungesättigter Monomerer aufgebaut sind.

3. Verfahren zur Herstellung der Mischungen gemäß Anspruch 1, dadurch gekennzeichnet, daß man die wäßrige Emulsion eines Pfropfpolymerisates in Gegenwart einer wäßrigen Lösung von Alkalisalzen von Bisphenolen bei pH-Werten <7 koaguliert und das Koagulat zum Pulver aufarbeitet.

## Claims

1. Pulverulent mixtures of a graft polymer of resin-forming monomers on a rubber and a bisphenol of the formula 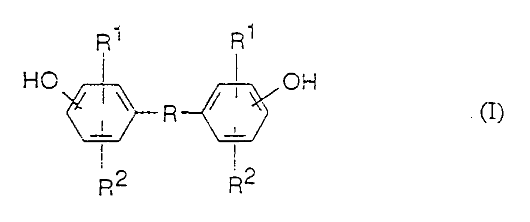 where
R¹, R² = H, C₁-C₄ alkyl, halogen and
R = single bond, -CH₂-, -C₂H₄-, -C₃H₆-, 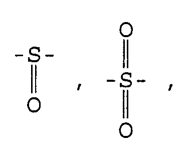 -O-.

2. Mixtures according to claim 1, in which the graft polymers are thermoplastic polymers comprising a particulate, partially crosslinked rubber as grafting backbone and a grafted polymer of olefinically unsaturated monomers.

3. Process for the production of the mixtures according to claim 1, characterised in that the aqueous emulsion of a graft polymer is coagulated in the presence of an aqueous solution of alkali-metal salts of bisphenols at pH values of < 7 and the coagulate is worked up to a powder.

## Revendications

1. Mélanges en poudre d'un polymère greffé de monomères formant des résines sur un caoutchouc et d'un bisphénol de formule I 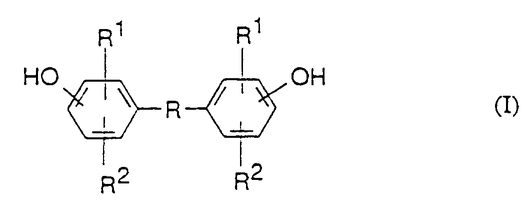 dans laquelle
R¹, R² = H, alkyle en C₁-C₄, halogène et
R = liaison simple, -CH₂-, C₂H₄-, -C₃H₆-, 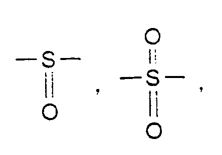 -O-.

2. Mélanges selon la revendication 1, dans lesquels les polymères greffés sont des polymères thermoplastiques, qui sont constitués d'un caoutchouc partiellement réticulé sous forme de particules comme tronc de greffage et d'un polymère greffé de monomères à insaturation oléfinique.

3. Procédé pour la fabrication des mélanges selon la revendication 1, caractérisé en ce que l'on coagule l'émulsion aqueuse d'un polymère greffé à des pH de moins de 7 en présence d'une solution aqueuse de sels alcalins de bisphénols et on transforme le coagulat en poudre.
